# EUROPÄISCHE PATENTSCHRIFT

(11) **EP 0 888 856 B1**
(45) Veröffentlichungstag und Bekanntmachung des Hinweises auf die Patenterteilung: **23.10.2002**
(21) Anmeldenummer: 98112235.1
(22) Anmeldetag: 02.07.1998
(51) Int. Cl.: B29B 17/00, B29C 43/14, B29C 43/26

(54) **Verfahren und Vorrichtung zum Herstellen von Platten aus zerkleinerten Kunststoffabfällen**
Process and apparatus for making boards from comminuted plastic waste
Procédé et disposatif pour la fabrication de panneaux à base de déchets fractionnés d'une matière plastique

(30) Priorität: 03.07.1997 DE 19728304; 08.08.1997 DE 19734338
(43) Veröffentlichungstag der Anmeldung: 07.01.1999
(73) Patentinhaber: Vöst, Günther, 86399 Bobingen (DE)
(72) Erfinder: Vöst, Günther, 86399 Bobingen (DE)
(74) Vertreter: Rapp, Bertram, Dr.

(56) Entgegenhaltungen:
- EP-A- 0 590 729
- EP-A- 0 688 643
- EP-A- 0 688 644
- EP-A- 0 688 645
- AT-B- 252 546
- DD-A- 144 885
- DE-A- 4 127 158
- DE-A- 4 215 349
- DE-A- 4 315 014
- DE-A- 19 624 430
- GB-A- 1 369 204

## Beschreibung

Die Erfindung betrifft ein Verfahren und Vorrichtung zur Herstellung einer Platte aus zerkleinerten Kunststoffabfällen nach dem Oberbegriff der Ansprüche 1 und 15.

Ein ähnliches Verfahren zum Herstellen von Formteilen, insbesondere von Platten, bei dem Abfallstoffe zerkleinert und mit einem Klebstoff vermischt werden und das Gemisch in einer Presse zum Formteil verpreßt wird, ist Gegenstand der DE 42 15 349 C2. Diese Druckschrift beschreibt ein dreistufiges Verfahren, wobei zunächst ein Gemisch aus Kunststoffabfallstoffen und einem Klebstoff hergestellt und in einer ersten Presse bei geringem Druck vorverdichtet wird. Anschließend wird die so entstandene vorverdichtete Platte in einer zweiten Presse bei höherem Druck und höherer Temperatur gepreßt und schließlich in einer dritten Presse bei wiederum geringerem Druck gekühlt und kalibriert.

Derartige Platten werden vor allem im Baubereich zum Zwecke der Trittschalldämmung und Druckverteilung eingesetzt, wobei sie unter einem Estrich verlegt werden.

Diese bekannten Platten weisen verschiedene Nachteile auf. Zum einen neigen sie bei feuchter Lagerung zum Modern, insbesondere wenn sie Naturfasern enthalten. Zum zweiten sind die Kanten und Ecken derartiger Platten instabil und brechen bei Berührung, insbesondere beim groben Hantieren mit der Platte, leicht ab. Schließlich ist die Oberflächenstruktur unsauber, da es sich in der Regel um ein Recyclingprodukt handelt, welches aus vielen verschiedenartigen textilen Abfällen gefertigt wurde. Selbst wenn man diese unsaubere Oberfläche nach dem Einbau nicht mehr sieht, neigt der Käufer doch dazu, eine Platte mit gleichmäßiger, homogener Oberfläche zu bevorzugen. Die bekannten Platten neigen außerdem beim Sägen zum Ausfransen der Ecken und Kanten.

Die DD 144 885 beschreibt ein Verfahren zur Herstellung von Formteilen aus Polyurethanabfällen, bei welchem vorgesehen ist, daß im Prozeß der Formgebung durch gleichzeitiges Aufkaschieren von aus Gummimischungen oder anderen Werkstoffen bestehenden Deckschichten eine Vergütung der Oberfläche erfolgt. Dieses Verfahren ist nicht befriedigend ausführbar, da das Auflegen einer Deckschicht auf das Gemisch aus Textilfasern, Granulat und Bindemittel nicht gleichmäßig möglich ist. Vor allem ergeben sich jedoch beim Verpressen dieses losen Gemisches mit der Deckplatte eine Vielzahl unschöner Falten und Verwerfungen der Deckplatte, da diese teilweise übereinandergeschlagen und in das Abfallmaterial hineingedrückt wird.

Die EP-A-688 644 beschreibt ein Verfahren zum Herstellen von Formteilen, unter anderem Platten, aus zerkleinerten Kunststoffabfällen, nämlich Teppichabfällen, unter Verwendung einer einzigen Presse, nämlich einer Doppelbandpresse. In dieser Druckschrift ist nicht von einem mehrstufigen Verfahren die Rede. Eine mögliche Deckschicht wird hier nachträglich aufgebracht, also nach dem Herstellen des eigentlichen Formteils.

Die in den genannten und weiter entfernt liegenden Druckschriften beschriebenen Verfahren weisen, unabhängig davon, ob sie mit oder ohne Abdeckschicht arbeiten, den Nachteil auf, daß die Oberflächen unregelmäßig sind. Dies ist insbesondere dann der Fall, wenn der zu verarbeitende Rohstoff unrein ist und beispielsweise Stücke aus Aluminiumfolie oder andere Zusatzstoffe enthält. Derartige Platten können z.B. im Möbelbau nicht oder nur eingeschränkt eingesetzt werden.

Es besteht daher die Aufgabe, ein Verfahren und eine Vorrichtung zum Herstellen von Platten aus zerkleinerten Kunststoffabfällen so weiterzubilden, daß sauber aussehende, unempfindliche und gut zu bearbeitende Platten entstehen, welche sogar in hochwertigen Einsatzgebieten, wie beispielsweise im Möbelbau, eingesetzt werden können.

Gelöst wird diese Aufgabe mit den Gegenständen der Ansprüche 1 und 15. Vorteilhafte Ausgestaltungen sind den abhängigen Ansprüchen entnehmbar.

Einige Ausführungsbeispiele der Erfindung werden im folgenden näher beschrieben.

Bei allen Ausführungsbeispielen wird das Verfahren durchgeführt mit drei nebeneinander angeordneten Pressen, deren Pressentische etwa die gleiche Höhe aufweisen. Über die Pressentische ist vorzugsweise ein Transportband geführt, das bei der ersten Presse abgewickelt und bei der dritten Presse aufgewickelt wird. Das Transportband ist breiter als die Breite der zu herstellenden Platte. Die Größe der Platte liegt beispielsweise bei 1,3 m Breite und 3,3 m Länge.

In einem ersten Ausführungsbeispiel bestehen die zerkleinerten Kunststoffabfälle aus textilen Natur- und Kunstfasern, welche eine Länge zwischen 6 und 20 mm sowie einen Durchmesser zwischen 0,1 und 1 mm aufweisen. Diese Textilfasern werden mit einem geeigneten flüssigen oder pulverförmigen Bindemittel vermischt. Hierbei werden 90 bis 95 Gew.-% Kunststoff mit etwa 5 bis 10 Gew.-% Bindemittel vermischt. Bei den Kunststoffen kann es sich um thermoplastische oder duroplastische Kunststoffe, bei den Bindemitteln um hierfür geeignete Klebstoffe bzw. aufschmelzbare Kunststoffe handeln, insbesondere um Isocyanat, Phenolharz und Polymerklebstoffe.

Auf dem Pressentisch der ersten Platte wird auf das Transportband ein rechteckiger Rahmen aufgelegt, dessen Innenabmessungen der herzustellenden Platte entsprechen. In diesen Rahmen wird das Abfall-Klebstoffgemisch auf eine Höhe von beispielsweise 150 mm eingefüllt. Sodann wird dieses Gemisch bei Raumtemperatur mit einem Druck von unter 1 bar vorverdichtet, wobei die so vorverdichtete Platte eine Dicke von 30 bis 40 mm aufweist.

Nach dem Hochfahren des Stempels dieser ersten Presse wird auf die oben liegende Oberfläche der vorverpreßten Platte ein Polyesterfaservlies aufgelegt, welches in an sich bekannter Weise vorher hergestellt wurde. Hierbei handelt es sich um ein vliesartiges, textiles, dünnes Material. Das Polyesterfaservlies bedeckt die gesamte Oberfläche der vorverdichteten Platte, welche aufgrund des bereits erfolgten Vorpreßvorgangs weitgehend glatt ist. Zur Verbesserung der Bindung zwischen dem Polyesterfaservlies und der vorverdichteten Platte wird vorzugsweise vor dem Auflegen des Polyesterfaservlieses ein flüssiger Sprühkleber entweder auf die Oberfläche der vorverdichteten Platte oder auf die Oberfläche des Polyesterfaservlieses oder auf beide Oberflächen aufgebracht.

Im Anschluß wird das Transportband betätigt, welches die vorverpreßte Platte zusammen mit dem lose aufgeklebten Polyesterfaservlies auf den Pressentisch der zweiten Presse transportiert.

Die zweite Presse wird bei einer Temperatur von 140°C bis 200°C betrieben und erzeugt bei Betätigen ihres Pressenstempels einen Druck in der Größenordnung von 10 bar bis 15 bar. Hierbei wird die Platte auf eine Restdicke von etwa 8 mm zusammengepreßt, wobei die Dicke von der Art des Kunststoffgemisches, der genauen Temperatur und dem Druck abhängt. Außerdem ist das Maß des Expandierens abhängig von eventuellen Wasseranteilen des Klebstoffes.

Anschließend wird die Platte vom Transportband zur dritten Presse transportiert, wo sie bei einem Druck von etwa 2 bar kalibriert wird. Der Pressentisch als auch der Pressenstempel dieser dritten Presse werden mit Leitungswasser gekühlt. Danach weist die Platte eine Dicke von 7 mm auf. Auf diese Weise werden Platten hergestellt, deren Dichte zwischen 100 und 1000 kg/m³ liegt.

Die so hergestellte Platte eignet sich vorzugsweise für den Baubereich, beispielsweise zur Trittschalldämmung, wobei sie unter einen Estrich eingebracht wird, und weist gegenüber den bekannten Platten eine Reihe von Vorteilen auf. Zum einen hat sie ein äußerst gleichmäßiges und homogenes, also sauberes Aussehen, da die Unregelmäßigkeiten der recycelten Fasern nicht mehr erkennbar sind. Die Platte wird daher bevorzugt gekauft. Vor allem ist die so kaschierte Platte jedoch wesentlich leichter zu handhaben und zu schneiden als bekannte Platten. Beim Sägen, entweder mit einer Stich- oder mit einer Kreissäge, fransen die Kanten nicht aus und auch beim unsauberen Behandeln und Stapeln verbleibt es durch die Bindungswirkung zwischen eigentlicher Platte und Polyesterfaservlies bei sauberen Ecken und Kanten. Darüberhinaus kann kein Wasser in die Platte eindringen, da es von dem Polyesterfaservlies abgehalten wird, weshalb die Platten auch bei längerer feuchter Lagerung nicht die Tendenz haben zu modern.

Anstelle des beschriebenen Polyesterfaservlieses können auch andere Faservliese verwendet werden, beispielsweise Polyamidfaservliese oder Glasfaservliese.

In einer weiteren Ausführungsform werden anstelle der Textilfasern beliebige andere, vorwiegend aus der Produktion stammende Kunststoffabfälle in Form von Kunststoffplättchen oder Kunststoffgranulat verwendet, wobei es sich vorzugsweise um thermoplastische Kunststoffe handelt, z.B. Polyäthylen, Polyester oder Polyvinylchlorid. Diese thermoplastischen Kunststoffe bedürfen keines Klebstoffes oder Bindemittels, wenn die Temperatur der Presse ausreichend hoch gewählt wird, um den Kunststoff mindestens teilweise aufschmelzen zu lassen, wodurch der Kunststoff selbst als Bindemittel wirkt und die Bindung innerhalb der Platte und zu dem bahnartigen Material herstellt. Hierzu sind Temperaturen erforderlich, welche in der Regel über 160°C liegen.

Die Kunststoffpartikel weisen beispielsweise einen Durchmesser von 20 mm auf und, falls sie plättchenförmig sind, eine Dicke von etwa 1 mm. Dem Gemisch aus Kunststoffpartikeln können auch andere Materialien aus dem Recyclingkreislauf beigegeben werden, beispielsweise Metallfolien wie Aluminiumfolien von Joghurtbechern aus Kunststoff Auch diese Metallfolien sind etwa auf die Größe der Kunststoffpartikel zerkleinert. Weitere Zusätze wie Baumwolle, Polyaramid, Aramid oder Glas und Steinwollefasern sind zur Erzielung besonderer Eigenschaften möglich.

Bei dieser Ausführungsform wird als Kunststoff-Folie vorzugsweise eine Folie aus dem gleichen oder ähnlichen Material wie die Kunststoffpartikel verwendet. Die Kunststoff-Folie ist ca. 1,5 mm dick, glasklar durchsichtig oder opak und weist vorzugsweise eine Lichtdurchlässigkeit von unter 50 % auf Es können auch gefärbte oder mit einem Muster, beispielsweise einem Holzfurniermuster versehene Folien verwendet werden.

Wie oben beschrieben kann die Folie auch zu beiden Seiten der vorverdichteten Platte eingelegt werden, wodurch eine doppelseitig mit Folie beschichtete Platte entsteht.

Abgesehen von Mustern oder Furnierdarstellungen kann die Folie auch Informationen, z.B. Texte, Bilder, Logos usw. aufweisen.

Die in diesem Ausführungsbeispiel beschriebenen Platten eignen sich für hochwertige Anwendungsfälle, beispielsweise als Tischlerplatten zum Herstellen von Möbeln, da ihnen die Folie ein hochwertiges und glattes Aussehen verleiht.

## Patentansprüche

1. Verfahren zum Herstellen von Platten aus zerkleinerten Kunststoffabfällen, welche in einer ersten Presse vorverdichtet und anschließend in einer zweiten Presse unter Druck und erhöhter Temperatur gepreßt werden, **dadurch gekennzeichnet, daß nach** dem Vorverdichten ein als Faservlies ausgebildetes bahnartiges Material auf die Platte gelegt und gemeinsam mit der Platte anschließend gepreßt wird und die Platte nach dem Pressen in einer dritten Presse gekühlt und hierbei bei erhöhtem Druck kalibriert wird.

2. Verfahren nach Anspruch 1, **dadurch gekennzeichnet, daß** die zerkleinerten Kunststoffabfälle Textilfasern mit einer Länge zwischen 5 und 30 mm und einem Durchmesser zwischen 0,05 und 2 mm sind, und zwar insbesondere Naturfasern und/oder Kunstfasern und/oder ein Gemisch aus Kunst- und Naturfasern.

3. Verfahren nach Anspruch 1, **dadurch gekennzeichnet, daß die zerkleinerten** Kunststoffabfalle Kunststoffplättchen oder ein Kunststoffgranulat sind.

4. Verfahren nach einem der Ansprüche 1 bis 3, **dadurch gekennzeichnet, daß** das Faservlies ein Polyesterfaservlies oder ein Polyamidfaservlies oder ein Glasfaservlies ist.

5. Verfahren nach einem der Ansprüche 1 bis 3, **dadurch gekennzeichnet, daß** das bahnartige Material eine Kunstoff-Folie ist.

6. Verfahren nach Anspruch 5, **dadurch gekennzeichnet, daß** die Kunststoff-Folie aus dem gleichen Material besteht wie mindestens ein Teil der zerkleinerten Kunststoffabfälle.

7. Verfahren nach einem der voranstehenden Ansprüche, **dadurch gekennzeichnet, daß** die zerkleinerten Kunststoffabfälle vor dem Vorverdichten mit einem Bindemittel vermischt werden.

8. Verfahren nach Anspruch 7, **dadurch gekennzeichnet, daß** das Bindemittel Isocyanat oder Phenolharz oder ein synthetischer Polymerklebstoff ist.

9. Verfahren nach einem der voranstehenden Ansprüche, **dadurch gekennzeichnet, daß** vor dem Auflegen des bahnartigen Materials mindestens eine der einander zugewandten Oberflächen von vorverdichteter Platte und bahnartigem Material mit einem Sprühkleber behandelt wird.

10. Verfahren nach einem der voranstehenden Ansprüche, **dadurch gekennzeichnet, daß** nach dem Vorverdichten auf beiden Oberflächen der vorverdichteten Platte jeweils ein bahnartiges Material aufgelegt und gemeinsam mit der Platte verpreßt wird.

11. Verfahren nach einem der voranstehenden Ansprüche, **dadurch gekennzeichnet, daß** die Vorverdichtung bei Raumtemperatur und einem Druck unter 1 bar und das Pressen bei einer Temperatur zwischen 120°C und 240°C und einem Druck zwischen 1 bar und 20 bar erfolgt.

12. Verfahren nach einem der voranstehenden Ansprüche, **dadurch gekennzeichnet, daß** genausolang vorverdichtet wie verpreßt wird, wodurch ein Taktschiebebetrieb möglich ist.

13. Verfahren nach einem der voranstehenden Ansprüche, **dadurch gekennzeichnet, daß** die Kalibrierung in der dritten Presse bei einem erhöhten Druck von etwa zwei bar stattfindet.

14. Verfahren nach einem der voranstehenden Ansprüche, **dadurch gekennzeichnet, daß** die Platte eine Dichte zwischen 100 kg/m³ und 1000 kg/m³ aufweist.

15. Vorrichtung zum Herstellen von Platten aus zerkleinerten Kunststoffabfällen, mit einer ersten Presse zur Vorverdichtung und mit einer zweiten Presse zur anschließenden Pressung unter Druck und erhöhter Temperatur, **dadurch gekennzeichnet, daß** sie eine dritte Presse aufweist, in welcher die Platte nach dem Pressen in der zweiten Presse kühlbar und bei erhöhtem Druck kalibrierbar ist.

## Claims

1. Method for manufacturing boards from comminuted plastic waste which undergoes pre-compression in a first press and is then pressed in a second press at pressure and increased temperature, **characterised in that** after the pre-compression a web-like material in the form of a fibre fleece is laid on the board and then pressed together with the board and after pressing the board is cooled in a third press and in the process calibrated at increased pressure.

2. Method according to claim 1, **characterised in that** the comminuted plastic waste is textile fibres with a length of between 5 and 30 mm and a diameter of between 0.05 and 2 mm, in particular natural fibres and/or synthetic fibres and/or a mixture of synthetic and natural fibres.

3. Method according to claim 1, **characterised in that** the comminuted plastic waste is plastic flakes or a plastic granulate.

4. Method according to one of claims 1 to 3, **characterised in that** the fibre fleece is a polyester fibre fleece or a polyamide fibre fleece or a glass fibre fleece.

5. Method according to one of claims 1 to 3, **characterised in that** the web-like material is a plastic film.

6. Method according to claim 5, **characterised in that** the plastic film consists of the same material as at least a part of the comminuted plastic waste.

7. Method according to one of the preceding claims, **characterised in that** before the pre-compression the comminuted plastic waste is mixed with a binding agent.

8. Method according to claim 7, **characterised in that** the binding agent is isocyanate or phenol resin or a synthetic polymer adhesive.

9. Method according to one of the preceding claims, **characterised in that** before the web-like material is applied, at least one of the facing surfaces of the pre-compressed board and web-like material is treated with a spray adhesive.

10. Method according to one of the preceding claims, **characterised in that** after the pre-compression a web-like material is laid on the two surfaces of the pre-compressed board and pressed with the board.

11. Method according to one of the preceding claims, **characterised in that** the pre-compression takes place at room temperature and a pressure of less than 1 bar and the pressing takes place at a temperature of between 120°C and 240°C and a pressure of between 1 bar and 20 bar.

12. Method according to one of the preceding claims, **characterised in that** the pre-compression is carried out for exactly the same length of time as pressing, allowing operation with timed shifting.

13. Method according to one of the preceding claims, **characterised in that** the calibration takes place in the third press at an increased pressure of approximately 2 bar.

14. Method according to one of the preceding claims, **characterised in that** the board exhibits a density of between 100 kg/m³ and 1000 kg/m³.

15. Device for manufacturing boards from comminuted plastic waste, with a first press for pre-compression and with a second press for subsequent pressing at pressure and increased temperature, **characterised in that** it exhibits a third press in which the board can be cooled after pressing in the second press and can be calibrated at increased pressure.

## Revendications

1. Procédé de fabrication de panneaux à base de déchets de matière plastique concassés, qui ont été pré-comprimés dans une première presse et ont été comprimés ensuite sous pression et sous une température plus élevée dans une deuxième presse, **caractérisé en ce que**, après la pré-compression, un matériau en forme de bande, conçu sous forme de nappe de fibres, a été posé sur le panneau et a été comprimé ensuite avec le panneau, et le panneau, après compression dans une troisième presse, est refroidi et laminé en plus sous une pression plus élevée.

2. Procédé selon la revendication 1, **caractérisé en ce que** les déchets de matière plastique concassés sont des fibres textiles avec une longueur comprise entre 5 et 30 mm et un diamètre entre 0,05 et 2 mm, à savoir en particulier des fibres naturelles et/ou des fibres artificielles et/ou un mélange de fibres naturelles et de fibres artificielles.

3. Procédé selon la revendication 1, **caractérisé en ce que** les déchets de matière plastique concassés sont des lamelles de matière plastique ou des granulés de matière plastique.

4. Procédé selon une des revendications 1 à 3, **caractérisé en ce que** la nappe de fibres est une nappe de fibres polyesters ou une nappe de fibres polyamides ou une nappe de fibres de verre.

5. Procédé selon une des revendications 1 à 3, **caractérisé en ce que** le matériau en bande est une feuille de matière plastique.

6. Procédé selon la revendication 5, **caractérisé en ce que** la feuille de matière plastique est réalisée dans le même matériau qu'au moins une partie des déchets de matière plastique concassés.

7. Procédé selon une des revendications précédentes, **caractérisé en ce que** les déchets de matière plastique concassés sont mélangés à un liant avant la pré-compression.

8. Procédé selon la revendication 7, **caractérisé en ce que** le liant est un isocyanate ou une résine phénolique ou une colle synthétique au polymère.

9. Procédé selon une des revendications précédentes, **caractérisé en ce que**, avant la pose du matériau en bande, au moins une des surfaces face à face d'un panneau pré-comprimé et d'une bande de matériau est traitée avec une colle à pulvériser.

10. Procédé selon une des revendications précédentes, **caractérisé en ce que**, après la pré-compression, un matériau en forme de bande est déposé sur chacune des deux surfaces du panneau pré-comprimé et est comprimé conjointement avec le panneau.

11. Procédé selon une des revendications précédentes, **caractérisé en ce que** la pré-compression est effectuée à température ambiante et avec une pression inférieure à 1 bar et la compression est effectuée à une température comprise entre 120°C et 240°C et une pression entre 1 bar et 20 bar.

12. Procédé selon une des revendications précédentes, **caractérisé en ce que** la durée de la pré-compression est identique à la durée de la compression, ce qui permet de travailler avec une avance cadencée.

13. Procédé selon une des revendications précédentes, **caractérisé en ce que** le laminage dans la troisième presse est effectué avec une pression plus élevée d'environ deux bars.

14. Procédé selon une des revendications précédentes, **caractérisé en ce que** le panneau présente une densité comprise entre 100 kg/m³ et 1 000 kg/m³.

15. Dispositif destiné à la fabrication de panneaux à base de déchets de matière plastique concassés, comprenant une première presse destinée à la pré-compression et une deuxième presse pour la compression consécutive sous une pression et une température plus élevée, **caractérisé en ce que** ledit dispositif comprend une troisième presse, dans laquelle le panneau peut être refroidi après la compression dans la deuxième presse et être laminé avec une pression plus élevée.
